Europäisches Patentamt

European Patent Office

Office européen des brevets

(11) Publication number: **0 404 591**
**A2**

# EUROPEAN PATENT APPLICATION

(21) Application number: **90306854.2**

(51) Int. Cl.⁵: **G11B 23/023**

(22) Date of filing: **22.06.90**

(30) Priority: **23.06.89 GB 8914454**
**30.11.89 GB 8927044**

(43) Date of publication of application:
**27.12.90 Bulletin 90/52**

(84) Designated Contracting States:
**DE ES FR GB IT**

(71) Applicant: **H.S.S. (PRECISION MOULDS)
LIMITED**
**Aston Fields Industrial Estate, 34 Sherwood
Road**
**Bromsgrove, Worcestershire B60 3DR(GB)**

(72) Inventor: **Smith, Arthur Frederick**
**8 Roslin Close, Harwood Park, Bromsgrove
B60 2EZ**
**Hereford & Worcester(GB)**
Inventor: **Harris, Desmond John**
**206 Birmingham Road, Bromsgrove, B60 0HA**
**Hereford & Worcester(GB)**

(74) Representative: **Russell, Paul Sidney et al**
**Barker, Brettell & Duncan 138 Hagley Road
Edgbaston**
**Birmingham B16 9PW(GB)**

(54) **A method of moulding a tape cassette storage case.**

(57) An elongate tape cassette storage sleeve having one open end and one closed end is formed by injection moulding in a cavity (42) between a hollow mould (40) and a core (44). The core extends within the mould from a mounting at one end and its free end is held located between opposed walls of the mould by two mould inserts (54); the inserts are interposed between the mould walls and the core on opposite sides of the core. The inserts are retained in dove-tail slots (52) in the mould. Each insert comprises three spaced parallel ribs (56) which lie flush against an opposed inclined face (48) of the core in a shut-out fit. The ribs form three ventilation slots (16) in the sleeve at its closed end and also form two cassette-pinching ribs, between the slots, which acquire sloping cassette-engaging surfaces from the inclined face (48) of the core.

*FIG.3.*

## A METHOD OF MOULDING A TAPE CASSETTE STORAGE CASE

This invention relates to a method of injection moulding an elongate tape cassette storage sleeve which is open at one end only to receive a cassette.

Video cassettes are sometimes supplied in cardboard or flimsy plastics dust covers, but for greater protection are often supplied in hard, moulded plastics, storage cases which protect them not only from dust and dirt but also from damage by impact or otherwise.

The hard cases used are most commonly of a book form, that is to say, having a cover portion which is hinged to a side edge of a spine of the case. Some form of integrally moulded clip fastening enables the case to be kept closed when containing a cassette.

Similar cases having hinged lids are used to protect other tape cassettes.

Such cases are clumsy to handle and can lead to cassettes being dropped, suffer damage particularly where the cover portion is hinged, and are relatively expensive to manufacture.

It has also been proposed to manufacture plastics storage cases in the form of elongate sleeves which have one end open to receive the cassette and the other end closed to stop the cassette falling right through. Such a construction has the advantage of simplicity but can be awkward to mould accurately by injection moulding.

It is an object of the present invention to provide an improved method of injection moulding a cassette storage case in the form of a sleeve.

The invention is characterised in that the sleeve is moulded in a cavity formed between a hollow mould and a core which extends within the mould from a mounting, a free-end portion of the core remote from the mounting being held located between opposed walls of the mould by positioning elements which are interposed between the walls and the core.

Suitable moulding materials may be polyethylene and polypropylene plastics of appropriate grades. Preferably, a material is used that is sufficiently transparent to enable a cassette within the sleeve to be inspected without removal.

In a preferred arrangement, the positioning elements comprise mould inserts fitted to the mould and abutting the core. The inserts may comprise a plurality of laterally spaced ribs which abut the core and form ventilation slots in the sleeve adjacent to its closed end. Between the ribs there may be formed cassette-pinching ribs which acquire sloping cassette-engaging surfaces from inclined surfaces of the core. Cassette-retaining means of the sleeve may comprise also a rib or ribs projecting inwards around the mouth of the sleeve (i.e. at its open end), and/or other means, to act additionally to secure a cassette introduced fully into the case.

There now follows a detailed description, to be read with reference to the accompanying drawings, of a video cassette storage case and its manufacture which illustrates the invention by way of example.

In the accompanying drawings:

Figure 1 shows a video cassette storage case in longitudinal section;

Figure 2 is a view of the case in section taken on line II-II of Figure 1, the inclination of retaining ribs at a closed end of the case being exaggerated for clarity;

Figure 3 is a view in section taken on line III-III of Figure 4, showing tooling for use in moulding the case; and

Figure 4 is a view in section taken on line IV-IV of Figure 3.

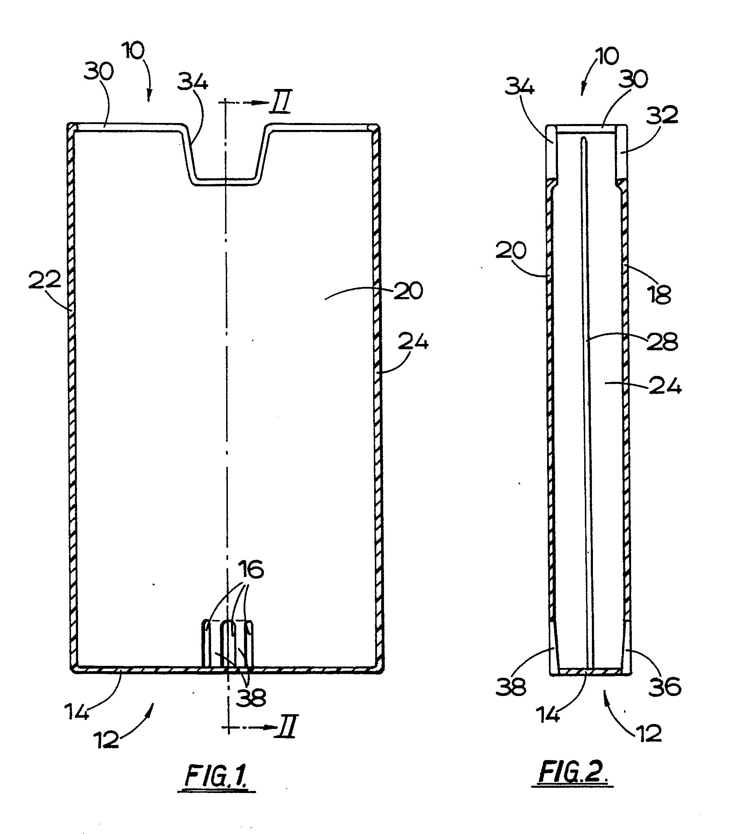

A video cassette storage case (Figures 1 and 2) is manufactured as a unitary moulding of a polyethylene plastics material of appropriate grade.

The case is in the form of a stiff sleeve, of shape and dimensions broadly corresponding to a standard VHS video cassette. The sleeve is, therefore, elongate and oblong rectangular in transverse cross-sectional shape. The sleeve is open at an upper end 10 only, as shown in Figures 1 and 2, the opposite end 12 being closed off by an end wall 14. Ventilation openings 16 are formed in each of opposed front and back walls 18 and 20 adjacent to the end wall 14 to allow passage of air into and from the sleeve when a cassette is withdrawn and introduced, respectively.

The case comprises also opposed side edge walls 22 and 24, all four walls being moulded of generally uniform thickness. Two longitudinally extending ribs 26 and 28 project centrally from inner surfaces of the side edge walls 22 and 24. The ribs are of substantially uniform depth (to the walls) and present slide surfaces of small surface area as compared with the areas of the inside surfaces of the walls.

At its open end 10, the mouth of the case is formed with a continuous rib 30 which projects inwards from top edge portions of the front, back and side edge walls. The front and back walls 18 and 20 are formed at their top edge portions with similar opposed cut-outs 32 and 34, enabling a cassette introduced into the sleeve to be gripped.

The interior dimensions of the sleeve enable a cassette to be introduced easily, edge surfaces of the cassette sliding against the slide surfaces of the ribs 26 and 28.

If required, a closure cap may be provided to fit over and seal the open end of the sleeve. Such a cap could be moulded integrally with the sleeve, with some form of hinge or other flexible connection connecting the two, or it could be formed separately.

Cassette-retaining means of the sleeve, preventing a cassette from falling out of the sleeve too readily, comprises the rib 30 around the mouth of the sleeve and also short pinching ribs 36 and 38 which project inwardly from generally central positions on the front and back walls 18 and 20 adjacent to the end wall 14. As seen from Figure 1 there are two ribs 38 on the back wall 20, and these are directly opposite a similar arrangement of the ribs 36 on the front wall 18. The ribs are presented by longitudinally-extending fingers of the end wall 14 which are separated laterally from one another (and, on opposite sides, from adjacent portions of the front and back walls) by three longitudinally-extending window slots forming the ventilation openings 16. Each rib has an upstanding wedge shape presenting a flat cassette-engaging surface which slopes inwards at a small angle (e.g. of about 1° 30') in the downwards direction towards the end wall 14. The four ribs so present two pairs of convergent surfaces to pinch and grip a leading end portion of a cassette inserted between them, and together with the mouth rib 30 provide for the cassette to be retained in a snug fit without marking the cassette.

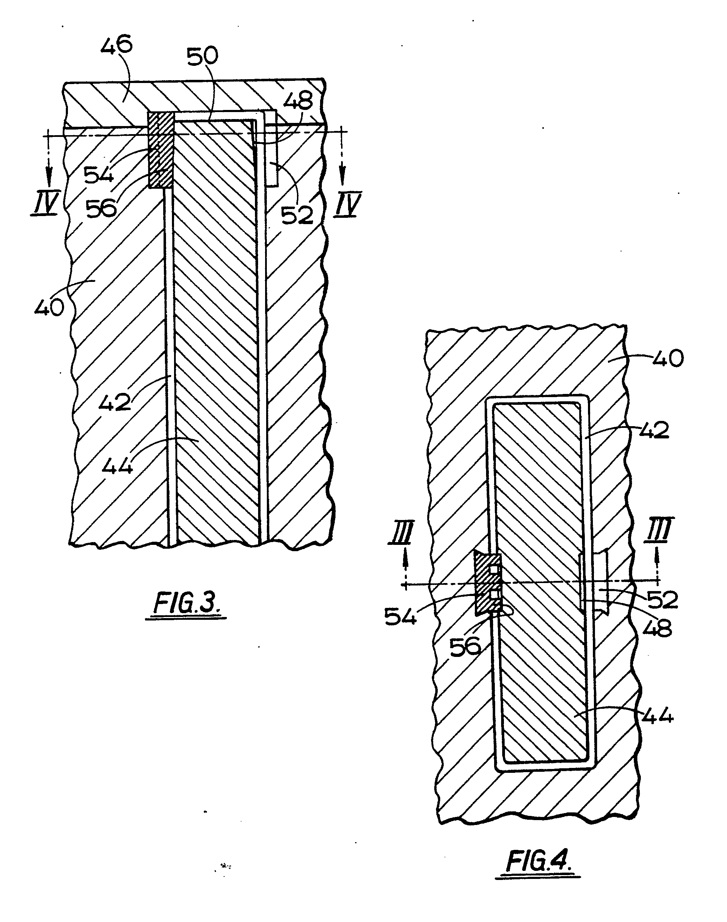

The manner in which the sleeve is formed by injection moulding will now be described with reference to Figures 3 and 4 which illustrate tooling for the purpose. The tooling comprises a hollow mould block 40 forming a cavity 42, an internal core 44, and an injection plate 46 through which the moulding material can be introduced into the mould cavity; in association with the core 44 the injection plate 46 itself forms that part of the mould cavity in which the end wall 14 of a cassette is to be formed.

Adjacent to the injection plate 46, an end portion of each of front and back surfaces of the core 44 has a central wedge-shaped rebate which provides a rectangular inclined face 48 extending longitudinally of the mould up to an adjacent end face 50 of the core; the two faces 48 are convergent, being oppositely inclined at angles of 1° 30' in the direction towards the end face 50.

Opposite each of the rebates in the core there is a dovetail slot 52 in the internal surface of the mould block 40. Each slot 52 retains a correspondingly shaped base portion of a mould insert 54 which projects to occupy the opposing rebate. Each insert comprises three parallel, laterally spaced, ribs 56 on the base portion, the ribs extending longitudinally of the mould and the width across the ribs being the same as the width across the rebate. Each of the ribs presents an inclined shut-out surface which lies flat against the inclined face 48 of the opposing rebate in the core in a shut-out fit; the mould inserts are so interposed between opposed walls of the mould and the core. As seen in Figure 3 (which, like Figure 4, shows only one of the two mould inserts in position) the injection plate 46 of the tooling accommodates end portions of the inserts which project beyond the mould block and core up to the limit of the cavity portion formed by the injection plate 46.

In moulding a sleeve, the three ribs 56 of each mould insert 54 form the three window slots providing the ventilation openings 16; it is to be noted that the slots extend right through the thickness of the end wall 14 of the sleeve. The spaces between the three ribs 56 of each insert provide for the pinching ribs 36 and 38 to be formed, the sloping cassette-engaging surfaces of the ribs being acquired from the inclined rebate faces 48 of the core.

In addition to forming the pinching ribs 36 and 38 and the openings 16, the mould inserts 54 have a further important function in the moulding process. Owing to the relatively long length of the core 44, which extends from a mounting at its end remote from the injection plate 46, the free end of the core could be deflected laterally through flexing of the core under injection pressures; a consequence of that would be uneven wall thickness in the moulded sleeve. The engagement between the core and the three ribs 56 of each of the mould inserts 54 provides for positive location of the free end of the core, and so gives a rigid construction which ensures that no such displacement of the core occurs.

## Claims

1. A method of injection moulding an elongate tape cassette storage sleeve which is open at one end to receive a cassette and is closed at its other end, characterised in that the sleeve is moulded in a cavity (42) formed between a hollow mould (40) and a core (44) which extends within the mould from a mounting, a free-end portion of the core remote from the mounting being held located between opposed walls of the mould by positioning elements (54) which are interposed between the walls and the core.

2. A method according to claim 1 in which the positioning elements comprise a mould insert (54) which is fitted to the mould (40) and abuts the core (44).

3. A method according to claim 2 in which the mould insert (54) comprises a plurality of laterally spaced ribs (56) which abut the core (44) and form ventilation slots (16) in the sleeve adjacent to its closed end.

4. A method according to claim 3 in which there is formed between the spaced ribs (56) of the insert (54) a cassette-pinching rib (36,38) of the sleeve, the pinching rib acquiring a sloping cassette-engaging surface from an inclined face (48) of the core.

5. A method according to any one of claims 1 to 4 in which the positioning elements comprise two mould inserts (54) which are positioned centrally of the core (44) on opposite sides.

_FIG.1._

_FIG.2._

FIG.3.

FIG.4.